# EUROPEAN PATENT SPECIFICATION

(11) **EP 2 948 288 B1**
(45) Date of publication and mention of the grant of the patent: **19.09.2018**
(21) Application number: 13702006.1
(22) Date of filing: 24.01.2013
(51) Int. Cl.: B29C 45/26, B29C 45/73, B29C 33/38, B29C 44/00

(54) **METHOD FOR MOULDING AN OBJECT USING A MOULD WITH INCREASED THICKNESS AND HEAT CONDUCTIVE MATERIAL**
VERFAHREN ZUM HERSTELLEN EINES BAUTEILS MIT EINER FORM MIT DICKERER WANDSTÄRKE UND WÄRMELEITENDEM MATERIAL
PROCÉDÉ POUR MOULER UNE OBJECT AVEC UNE MOULE AVEC UN ÉPAISSEUR ACCRUE ET MATÉRIAU THERMOCONDUCTEUR

(43) Date of publication of application: 02.12.2015
(73) Proprietor: Toyota Motor Europe, 1140 Brussels (BE)
(72) Inventor: KAMEYAMA, Tsuyoshi, B-1160 Auderghem (BE); PRINCE, Michael, B-1140 Evere (BE)
(74) Representative: Intès, Didier Gérard André
(86) International application number: PCT/EP2013/051343
(87) International publication number: WO 2014/114338

(56) References cited:
- DE-A1- 19 533 045
- JP-A- H04 239 612

## Description

### Field of the Disclosure

The present disclosure is related to the molding of objects, and more particularly to injection molding plastic objects having one or more sections of increased thickness.

### Background of the Disclosure

Molding of various plastic parts has been performed by various methods in the past. Such molding typically involves a mold into which molten plastic material is provided and solidified to take the form of a cavity within the mold. Once solidified, the mold may be opened and the object having the shape of the cavity may then be removed.

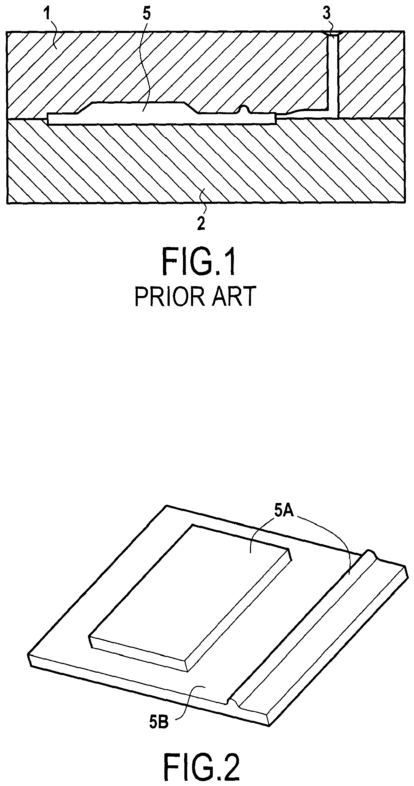

Figure 1 is an exemplary mold according to currently available systems used for molding plastic parts. As shown, such a mold typically includes two parts 1 and 2 that when joined form a mold cavity 5 between them. An injection nozzle 3 of the mold enables the introduction of molten plastic material into mold cavity 5.The mold cavity 5 provides areas enabling more or less material to accumulate in such areas, thereby creating sections of greater and lesser thickness in the molded part.

It is often desirable to provide plastic parts having sections of increased thickness and/or ribs to provide, for example, additional strength, insulation (e.g. heat, sound), and aesthetic changes, among other things. For reference, Figure 2 shows such a plastic part having sections of varying thickness corresponding to the mold shown at Figure 1.

Such sections of increased thickness can lead to an increase in weight while also increasing molding times and complexity of mold structures. This can translate to greater waste, undesirable product designs where such weight is undesirable, and greater costs for design and fabrication of the mold structures.

The addition of foaming agents to the plastic material can aid in alleviating some of the issues related to weight and waste, however, increased molding times and even more complex mold designs remain a problem.

Japanese patent application P2001-96592 teaches a mold for molding fan blades, the mold including a movable segment enabling expansion of the molten plastic material via sliding displacement of the movable segment such that extra thickness may be present at the location on the molded part corresponding to the movable segment of the mold. The patent application JP H04 239612 A teaches that the parts with higher thermal conductivity should correspond to thicker parts.

However, such a mold results in a complicated mold structure enabling movement of the movable segment while also requiring increased time for the mold cycle while waiting for solidification of the portions of plastic in the movable area.

It is accordingly a primary object of the disclosure to provide systems and methods for molding that overcome the deficiencies of the currently available systems and methods.

### SUMMARY OF THE DISCLOSURE

In accordance with the disclosure, the methods for molding described herein are intended to aid in overcoming one or more deficiencies present in the prior art.

A mold for molding an object having a section of increased thickness is provided for comprehension purposes. The mold comprises a mold cavity comprising a first zone and a second zone and means for providing a different thermal conductivity at the first and second zones of the mold cavity.

By providing such a mold, it is possible to carry out the method of the invention, and enable the creation of sections of greater and lesser thickness at desired locations of a plastic part based on an opening time of the mold and the differing thermal conductivity of the first and second zones, while avoiding complicated mold structures and added time associated with maintaining the mold in a closed state. In other words, by enabling certain portions of the material to solidify within the closed mold (e.g., those portions in contact with a zone having a higher coefficient of thermal conductivity and/or a thermal circuit) while other portions remain un-solidified at the opening of the mold (e.g., those portions in contact with a zone having a lower coefficient of thermal conductivity and/or lacking a thermal circuit), the un-solidified portions are enabled to expand (e.g., by way of a foaming agent added to molten plastic) upon opening of the mold and to thereby increase thickness without increasing weight of the molded part.

It will be understood for purposes of the present disclosure that the term "molten material" and variations thereof shall mean a material that has been heated to a temperature above its melting point so that the material is in the liquid phase so long as its temperature remains above its melting point. Further, the term "solidifying" and variations thereof for purposes of the present disclosure shall mean the transformation from the liquid phase to the solid phase by allowing the material to cool to below its melting point, i.e. where the material presents structural rigidity and resistance to changes of shape or volume. A portion of material shall be understood to be "solidified" when the maximum temperature of substantially all of the portion of material falls below the melting point of the material.

The means for providing a different thermal conductivity of the first and second zones of the mold cavity can be provided by a mold comprising a first material having a first coefficient of thermal conductivity and a second material having a second coefficient of thermal conductivity. The first and second materials may be positioned within the mold so as to result in differing thermal conductivity within the mold cavity.

The means for providing a different thermal conductivity of the first and second zones of the mold cavity can be an insert located in a recess of the mold positioned at the first or second zone. In such embodiments, the mold can include a concavity configured to receive the insert, the concavity corresponding to the section of increased thickness of the object.

The insert can comprise a different material than that of the mold, thereby contributing to the difference in thermal conductivity.

Alternatively, or in addition, the means for providing a different thermal conductivity of the first and second zones of the mold cavity can comprise a thermal circuit, and the thermal circuit may be configured to cool or warm at least the first or second zone of the mold cavity, thereby further contributing to the difference in thermal conductivity.

Importantly, the insert and/or the thermal circuit can be used in conjunction with one another, or separately and interchangeably. For example, according to some embodiments an insert may comprise the thermal circuit, or the thermal circuit may be separate from the insert but still provide a difference in thermal conductivity by modifying the rate at which heat is removed from particular zones of the mold cavity, whereas an insert formed of a different material of the mold may possess a different coefficient of thermal conductivity based on the material used. Therefore, it may be possible to produce any number of different configurations using one or both of an insert and a thermal circuit.

The thermal circuit is a cooling circuit configured to cool a zone associated with a first portion of the object to be molded. Alternatively, the thermal circuit is a heating circuit configured to warm a zone associated with the desired section of increased thickness.

The mold may comprise at least two parts configured to be detachably assembled together.

According to the invention, a method for molding an object according to claim 1 is provided.

As used herein, "first portion" refers to sections outside of sections of desired increased thickness, while "second portion" refers to sections of desired increased thickness.

The material provided comprises a foaming agent. This foaming agent may comprise a surfactant type foaming agent and/or a blowing type foaming agent as desired. Examples of such foaming agents may include nitrogen, carbon dioxide, and/or any other suitable foaming agent. For example, the foaming agent may comprise MuCell by Trexel Inc., of Wilmington, Massachusetts.

After the separating, expansion of the second portion is enabled until the second portion has solidified to produce the desired section of increased thickness.

Advantageously, providing of the material is performed at a rate permitting a temperature gradient within the material during and immediately following the providing to be minimized. For example, providing may be done by way of an injection nozzle, and may be performed start to finish while the material remains in a molten state. Alternatively, or in addition, flow through an injection nozzle may be provided and metered according to a desired volume of material.

The material can be provided to the mold cavity in a quantity calculated to permit an expansion of the material to completely fill the mold cavity by way of foaming pressure, in this way, the filling of the mold cavity may be accomplished without application of holding pressure.

An opening time of the mold is calculated based on a desired expansion amount of the second portion.

The second zone can be provided with an insert configured to modify the thermal conductivity of the second zone to result in the second thermal conductivity. The insert is provided to a concavity (i.e., concave area) present in the mold.

Cancelled

Cancelled

Cancelled

Cancelled

Cancelled

Cancelled

Cancelled

It is to be understood that, except in cases of clear incompatibility and unless otherwise stated, features of one embodiment or example described herein can similarly be applied to other embodiments or examples described herein.

Other features and advantages of the disclosure will become apparent from the following detailed description, taken in conjunction with the accompanying drawings, which illustrate, by way of example, the principles of the disclosure.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, serve to explain the principles thereof.

### BRIEF DESCRIPTION OF THE DRAWINGS

Figure 1 is an exemplary mold according to currently available systems used for molding plastic parts;
Figure 2 is an exemplary plastic part molded using methods of the present disclosure;
Figure 3A illustrates an exemplary mold for carrying out the method of the present disclosure;
Figure 3B illustrates another exemplary mold for carrying out the method of the present disclosure;
Figure 4A is an illustration of yet another exemplary mold for carrying out the method of the present disclosure;
Figure 4B illustrates yet another exemplary mold for carrying out the method of the present disclosure; and
Figure 5 is a block diagram showing exemplary steps for molding plastic objects according to the present disclosure.

### DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

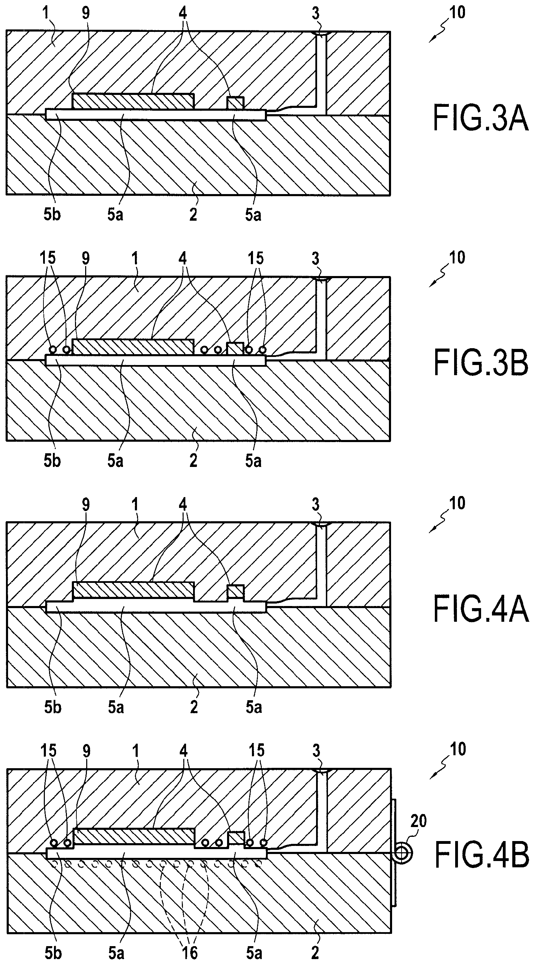

Figure 3 illustrates an exemplary mold for carrying out the method of the present disclosure, this mold being configured to form a part substantially similar to that shown at Figure 2, while avoiding drawbacks of other molding systems such as that shown at Figure 1. As shown in Figure 3, such a mold includes at least one injection nozzle 3, a first part 1, and a second part 2, where the first and second parts 1 and 2 are configured to be joined together to form mold cavity 5 between them.

First and second parts 1 and 2 may be formed from any suitable material capable of withstanding temperatures associated with injection molding. For example, first and second parts 1 and 2 may be formed from aluminum and alloys thereof. Additionally, first and second parts 1 and 2 can each be of the same material or each may be a different material.

First and second parts 1 and 2 may be formed from material having a coefficient of thermal conductivity which is sufficiently high to enable rapid cooling of a molten material (e.g., molten plastic) introduced within mold cavity 5 of mold 10.

Surfaces associated with mold cavity 5 may be formed in one or more parts of first and second parts 1 and 2 by removing a portion material from one or more of first and second parts 1 and 2 so as to produce a desired cavity shape. Such removal may be performed by, for example, a milling machine (e.g., computer numerical control (CNC) milling in conjunction with computer aided drafting (CAD) tools), or other suitable devices. Alternatively, surfaces of mold cavity 5 may be formed by way of a stamping process or other process configured to result in a void within one or more of the first and second parts 1 and 2 such that upon joining of first and second parts 1 and 2, a desired shape of mold cavity 5 results therebetween.

Various techniques may be employed for joining of first part 1 and second part 2. For example, first and second parts 1 and 2 may be joined at a desired location by an optional articulation 20 (e.g., a hinge, see Figure 4B), enabling opening and closing of the mold for access to mold cavity 5 as desired. Alternatively first and second parts 1 and 2 may be freely separable from one another, and may be joined by alignment and contact between surfaces of first and second parts 1 and 2. One of skill in the art will recognize that various devices may be utilized for purposes of maintaining mold 10 in a closed state as desired, for example, hydraulic jacks may enable opening and closing of the mold, alternatively, or in addition, fasteners (e.g., clamps, bolts, etc.) may be used. When desirable, no such devices may be used, for example, based on a particular mold design.

For example, first and second parts 1 and 2 may be configured such that no holding pressure is applied during injection and solidification of an object. In other words, high pressures typically used to prevent shrinkage of the material may be avoided in view of the foaming agent.

Injection nozzle 3 is configured to provide a molten material (e.g., molten plastic) to mold cavity 5 during an injection molding process. Therefore, injection nozzle 3 may comprise a channel within one or more of first and second parts 1 and 2, this channel being configured for fluid communication with a provider of molten material (not shown). The molten material injected via injection nozzle 3 may comprise at least a desired plastic material from which an object is to be formed, the plastic material being heated to a temperature exceeding its melting point. The molten material may further comprise, where desired, a foaming agent, among other things such as pigments, reflective elements, magnetic particles, etc. Importantly, while the various components of the injected material are described here with regard to Figure 3, such components may be applicable and utilized with any molding system and method falling within the scope of the present disclosure.

Injection nozzle 3 is also in fluid communication with mold cavity 5 such that upon introduction of fluid material (e.g., molten plastic) via injection nozzle 3, such material is provided to mold cavity 5. Injection nozzle 3 in conjunction with the material provider may be configured to provide the molten material rapidly so as to minimize a temperature gradient within the material during and immediately following injection into mold cavity 5.

Mold cavity 5 may take any desired shape associated with a molded object to be formed. For example, figure 2 shows a molded object having a flat surface first portion 5B corresponding to zone 5b of mold 10, and second portions comprising two sections of locally increased thickness 5A. These sections of locally increased thickness 5A correspond to zones 5a of mold cavity 5. As noted above, "first portion" refers to sections outside of sections of desired increased thickness (e.g., sections 5B), while "second portion" refers to sections of desired increased thickness (e.g., sections 5A).

A cross-section taken along line A-A of the object shown in figure 2 conforms with the cross-section of mold cavity 5 shown in the figures of the present application. It is to be understood that the shape is merely exemplary in that mold cavity 5 may have any desired shape, for example, a steering column cover, a fan blade, a mobile phone mount, a cup holder, etc., with sections of desired increased thickness located at any desired position.

According to the present disclosure, mold 10 includes means for providing different thermal conductivity at one or more zones within mold cavity 5. Importantly, different thermal conductivities may be provided in a number of ways, for example, a portion of a secondary material having a different coefficient of thermal conductivity may be provided within mold 10 to result in a thermal conductivity different than the primary material comprising mold 10. In such an example, mold 10 may be primarily comprised of aluminum having a thermal conductivity coefficient k of approximately 215 watts per meter per Kelvin (W/(m.K)) at 125° C, while a zone in mold 10 at a section of desired increased object thickness within mold cavity 5 may comprise stainless steel having a thermal conductivity coefficient k of approximately 17 W/(m.K) at 125° C.

In embodiments comprising materials having different coefficients of thermal conductivity, mold 10 may be fabricated including the desired materials. Alternatively, or in conjunction therewith, different molten materials may be provided within mold 10 by way of one or more inserts 4 configured to be placed in zones within mold cavity 5. Inserts 4 may be of any desired thickness suitable for modifying thermal conductivity in a zone of mold cavity 5 so as to result in a desired retardation, or acceleration depending on the configuration, in cooling and solidification of an injected molten material.

Importantly, mold 10 may include concave areas 9 configured to receive inserts 4. In other words, concave areas 9 may be formed having shapes substantially similar to shapes of inserts 4. Positions of concave areas 9 correspond with sections of desired increased thickness.

One of skill in the art will recognize that the materials listed are exemplary only and that any combination of suitable materials may be used for the primary material and secondary material comprising mold 10. For example, copper may be used as a primary material of mold 10 with an iron or steel secondary material, thereby producing a desired difference in thermal conductivity.

One of skill in the art will also recognize that the selection of materials need not be limited to two materials, and that any number of different materials may be used to affect varying levels of thickness at different sections of an object to be molded. For example, mold 10 may comprise a primary material of aluminum with a secondary material a first section of desired increased thickness comprising iron, and a tertiary material at a second section of desired increased thickness comprising stainless steel. As will be discussed below, such a configuration may result in the ability to obtain greater thickness in the second section of desired increased thickness than that obtained at the first section of desired increased thickness.

Figure 3B illustrates another exemplary mold for carrying out the method of the present disclosure. As shown at Figure 3B, mold 10 may be provided with one or more thermal circuits 15 configured to modify thermal conductivity of particular zones of mold 10 associated with mold cavity 5. Thermal circuit 15 may, for example, comprise a series of channels and/or tubes within mold 10 that may be supplied with a cooling fluid, for example, compressed air and/or water such that a greater portion of thermal energy in a zone in and around thermal circuit 15 is carried away by the cooling fluid, than is conducted by the material of mold 10 and/or inserts 4 outside of zones in and around thermal circuits 15. Alternatively, thermal circuits 15 may instead be "heating circuits" and may comprise, for example, resistive heating elements serving to reduce thermal conductivity of zones of mold 10 within mold cavity 5 by way of provision of additional thermal energy. In such a scenario, the heating circuits may be provided corresponding to zones of desired increased thickness.

Based on the above, thermal circuits may be located in correspondence with sections other than where an increased thickness is desired, such that more rapid cooling of a molten material occurs via of heat removal by thermal circuit 15. Notably, thermal circuits 15 may be used either alone or in conjunction with different materials (e.g., inserts 4) for purposes of modifying thermal conductivity in desired zones of mold 10 within mold cavity 5.

As noted, by providing such thermal circuits 15, it becomes possible to vary the thermal conductivity of mold 10 within mold cavity 5 with or without the use of different materials having different coefficients of thermal conductivity. Further, by controlling the flow rate of the cooling fluid or the heat produced in a heating circuit, and/or the locations of thermal circuit 15, it may be possible to create a number of different sections of desired increased thickness each having a different thickness.

Figure 4A is an illustration of another exemplary mold for carrying out the method of the present disclosure. As shown in figure 4A, concave areas 9 may be provided with a depth greater than a thickness of inserts 4, so as to enable a greater amount of material to accumulate at a section of desired increased thickness. Such a configuration may be used to further enhance the zone of increased thickness, and this adaptation may be made to any mold described in conjunction with the present disclosure.

Figure 4B is similar to Figure 4A, except a thermal circuit 15, as described above has been provided. Further, optionally provided is a thermal circuit 16 which may further modify thermal conductivity of the mold as already discussed herein, but evenly across a section of the mold. One of ordinary skill in the art will recognize that optional thermal circuit 16 may function similarly to thermal circuit 15 (e.g., heat or cool) and also may be provided to any of the molds discussed herein despite it being shown in Figure 4B only.

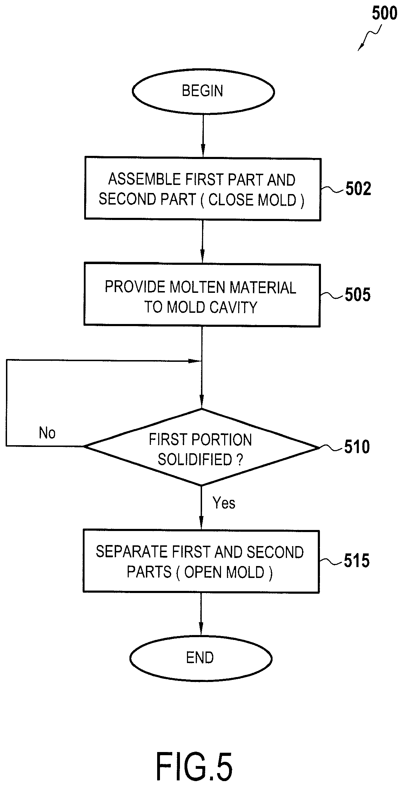

Figure 5 is a block diagram 500 showing exemplary steps for molding plastic objects according to the present disclosure. Such steps may be carried out using any mold presenting at least two zones of different thermal conductivity.

Mold 10 being comprised of first and second parts 1 and 2 can be assembled so as to form mold cavity 5 therebetween (step 502). As noted above, such assembly may be accomplished by suitable methods such as fastening, superposing, etc., as long as mold cavity 5 is properly defined therein.

A molten material can then be provided to mold cavity 5 (step 505). This molten material may comprise for example, molten plastic and, where desired, a foaming agent or other suitable substance configured to cause expansion of a molten plastic material, among other things (e.g., pigments, reflective materials, magnetic materials, etc.) The molten material may be provided via injection nozzle 3 and may be provided under varying levels of pressure to facilitate injection. Further, the providing may be performed at a rate permitting a temperature gradient within the material during and immediately following the providing to be minimized.

Further, the material can be provided to mold cavity 5 in a quantity calculated to permit an expansion of the material to completely fill mold cavity 5 by way of, e.g., foaming pressure, particularly where a foaming agent has been provided to the material. For example, for a particular mold cavity 5, a particular molten material, and a desired object final weight, it may be determined that an amount of material approximately equal to 80 percent or greater, better 90 percent or greater of the volume of mold cavity 5 should be injected during the providing phase.

Following the providing step, first and second parts 1 and 2 may remain assembled (i.e., closed mold) (step 510: no) until such time that the first portion has solidified. As noted above, the first portion shall be considered to be that portion of the molded object lying outside regions of desired increased thickness 5A and 5B.

Once it is determined that the first portion has solidified (step 510: yes), the mold may be opened (step 515), e.g., first and second parts 1 and 2 may be separated, and the second portion of material allowed to expand. Such a determination may be made based on a predetermined time map for example, for a particular material and mold configuration. In addition, or alternatively, one or more sensors may be provided for determining a temperature of portions of mold 10 and/or the object being molded. Data from these sensors may be provided to a computer loaded with software for determining an opening time of mold 10 based on various inputs from an operator.

For example, the determination of when to open the mold may be based not only on solidification of the first portion, but also on a desired amount of increased thickness (e.g., expansion). In other words, mold (10) may be opened immediately upon solidification of first portion 1, or may remain closed beyond a point where the first portion has solidified to allow further cooling of the second portion prior to opening of the mold. By waiting in this fashion, the extent to which the second portion may expand, and thereby the resulting thickness, can be reduced.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

Although the present disclosure herein has been described with reference to particular embodiments, it is to be understood that these embodiments are merely illustrative of the principles and applications of the present disclosure.

For example, it is possible to utilize an insert having a higher thermal conductivity that that of the mold material, such that the insert corresponds to a desired section of decreased thickness. In other words, a portion of the molded object may be cooled more rapidly by the insert, and upon opening the mold, the remaining un-solidified material of the object may expand to result in increased thickness.

It is intended that the specification and examples be considered as exemplary only, with a true scope of the disclosure being indicated by the following claims.

## Claims

1. A method for molding an object using a mold (10) having at least two parts (1, 2) that when joined form a mold cavity (5) between them, the mold cavity (5) comprising a first zone (5b) having a first thermal conductivity, and a second zone (5a) having a second thermal conductivity lower than the first thermal conductivity, the method **characterized by** comprising:
providing a material comprising molten plastic and a foaming agent, to the mold cavity (5);
separating the at least two parts (1, 2) after a first portion of the molten plastic adjacent to the first zone (5b) has solidified, but before a second portion of the molten plastic adjacent to the second zone (5a) has solidified, to result in a desired section of increased thickness of the object.

2. The method according to claim 1, further comprising: after the separating, enabling expansion of the second portion until the second portion has solidified to produce the desired section of increased thickness.

3. The method according to any of claims 1-2, wherein the providing is performed at a rate permitting a temperature gradient within the material during and immediately following the providing to be minimized.

4. The method according to any of claims 1-3, wherein the material is provided to the mold cavity (5) in a quantity calculated to permit an expansion of the material to completely fill the mold cavity (5) by way of foaming pressure, and preferably without application of holding pressure.

5. The method of any of claims 1-4, wherein an opening time of the mold is calculated based on a desired expansion amount of the second portion.

6. The method of any of claims 1-5, further comprising providing to the second zone (5a) an insert configured to modify the thermal conductivity of the second zone (5a) to result in the second thermal conductivity, the insert preferably being provided to a concavity (9) present in the mold (10).

## Patentansprüche

1. Verfahren zum Gießen eines Bauteils unter Verwendung einer Form (10), die mindestens zwei Teile (1, 2) aufweist, die beim Zusammenfügen einen Formhohlraum (5) zwischen ihnen bilden, wobei der Formhohlraum (5) einen ersten Bereich (5b) mit einer ersten Wärmeleitfähigkeit und einen zweiten Bereich (5a) mit einer zweiten Wärmeleitfähigkeit, die geringer als die erste Wärmeleitfähigkeit ist, umfasst, wobei das Verfahren **dadurch gekennzeichnet ist, dass** es umfasst:
Bereitstellen eines geschmolzenen Kunststoff und ein Schäummittel umfassenden Materials, in dem Formhohlraum (5),
Trennen der mindestens zwei Teile (1, 2), nachdem sich ein erster Abschnitt des geschmolzenen Kunststoffs, der an den ersten Bereich (5b) angrenzt, verfestigt hat, aber bevor sich ein zweiter Abschnitt des geschmolzenen Kunststoffs, der an den zweiten Bereich (5a) angrenzt, verfestigt hat, so dass ein gewünschter Abschnitt erhöhter Dicke des Bauteils resultiert.

2. Verfahren nach Anspruch 1, ferner umfassend: nach dem Trennen, Ermöglichen einer Ausdehnung des zweiten Abschnitts, bis sich der zweite Abschnitt verfestigt hat, um den gewünschten Abschnitt erhöhter Dicke zu erzeugen.

3. Verfahren nach einem der Ansprüche 1 - 2, wobei das Bereitstellen mit einer Geschwindigkeit durchgeführt wird, die es ermöglicht, dass ein Temperaturgradient innerhalb des Materials während und unmittelbar nach dem Bereitstellen minimiert ist.

4. Verfahren nach einem der Ansprüche 1 - 3, wobei das Material in dem Formhohlraum (5) in einer Menge bereitgestellt ist, die so berechnet wird, dass es einer Ausdehnung des Materials möglich ist, den Formhohlraum (5) über Schäumdruck und vorzugsweise ohne Anwendung eines Haltedrucks vollständig auszufüllen.

5. Verfahren nach einem der Ansprüche 1 - 4, wobei der Öffnungszeitpunkt der Form basierend auf einem gewünschten Ausdehnungsbetrag des zweiten Abschnitts berechnet wird.

6. Verfahren nach einem der Ansprüche 1 - 5, das ferner ein Bereitstellen in dem zweiten Bereich (5a) eines Einsatzes umfasst, der konfiguriert ist, die Wärmeleitfähigkeit des zweiten Bereichs (5a) zu modifizieren, so dass die zweite Wärmeleitfähigkeit resultiert, wobei der Einsatz vorzugsweise an einer in der Form (10) vorliegenden Höhlung (9) bereitgestellt ist.

## Revendications

1. Procédé de moulage d'un objet en utilisant un moule (10) ayant au moins deux parties (1, 2) qui, quand elles sont reliées, forment une cavité de moule (5) entre elles, la cavité de moule (5) comportant une première zone (5b) ayant une première conductivité thermique, et une deuxième zone (5a) ayant une deuxième conductivité thermique plus basse que la première conductivité thermique, le procédé étant **caractérisé en ce qu'**il comporte le fait de :
fournir une matière comportant de la matière plastique fondue et un agent moussant, pour la cavité de moule (5) ;
séparer les au moins deux parties (1, 2) une fois qu'une première partie de la matière plastique fondue adjacente à la première zone (5b) s'est solidifiée, mais avant qu'une deuxième partie de la matière plastique fondue adjacente à la deuxième zone (5a) se soit solidifiée, avec pour résultat une section souhaitée d'une épaisseur accrue de l'objet.

2. Procédé selon la revendication 1, comportant en outre le fait de : après la séparation, permettre une expansion de la deuxième partie jusqu'à ce que la deuxième partie se soit solidifiée pour produire la section souhaitée de l'épaisseur accrue.

3. Procédé selon l'une quelconque des revendications 1 à 2, selon lequel la fourniture est réalisée à une vitesse permettant un gradient de température dans la matière pendant et immédiatement après la fourniture devant être minimisée.

4. Procédé selon l'une quelconque des revendications 1 à 3, selon lequel la matière est fournie à la cavité de moule (5) dans une quantité calculée pour permettre à une expansion de la matière de remplir complètement la cavité de moule (5) au moyen de la pression de formation de mousse, et de préférence sans application de pression de maintien.

5. Procédé selon l'une quelconque des revendications 1 à 4, selon lequel un temps d'ouverture du moule est calculé sur la base d'une quantité d'expansion souhaitée de la deuxième partie.

6. Procédé selon l'une quelconque des revendications 1 à 5, comportant en outre le fait de prévoir dans la deuxième zone (5a) un insert configuré pour modifier la conductivité thermique de la deuxième zone (5a) avec pour résultat la deuxième conductivité thermique, l'insert étant de préférence prévu dans une concavité (9) présente dans le moule (10).
